# EUROPEAN PATENT APPLICATION

(11) **EP 4 075 269 A1**
(43) Date of publication of application: **19.10.2022**
(21) Application number: 21844172.3
(22) Date of filing: 23.07.2021
(51) Int. Cl.: G06F 9/455, G06F 16/188

(54) **FILE PROCESSING METHOD AND APPARATUS, ELECTRONIC DEVICE, AND STORAGE MEDIUM**

(30) Priority: 20.02.2021 CN 202110194453
(71) Applicant: BEIJING BAIDU NETCOM SCIENCE TECHNOLOGY CO., LTD., Beijing 100085 (CN)
(72) Inventor: MIAO, Yongchang, Beijing 100085 (CN)
(74) Representative: Feller, Frank
(86) International application number: PCT/CN2021/108012
(87) International publication number: WO 2022/174553

(57) **Abstract**

The present disclosure provides a file processing method and apparatus, an electronic device and a storage medium, which relate to the field of cloud computing. The specific implementation includes: determining a container, corresponding to container scheduling group information, in a target node based on the container scheduling group information corresponding to a file operation request received by the target node; determining a file path of the container by using a node directory of the target node; and performing an operation on a file under the file path, according to the file operation request. The solution of the embodiment of the present disclosure can reduce the operation and maintenance requirements of the container cluster management system and have better compatibility.

## Description

The present disclosure claims priority to Chinese Patent Application No. 202110194453.2, filed on February 20, 2021 and entitled "FILE PROCESSING METHOD AND APPARATUS, ELECTRONIC DEVICE, AND STORAGE MEDIUM", which is incorporated herein by reference in its entirety.

### TECHNICAL FIELD

The present disclosure relates to the field of computer technology, and in particular to the field of cloud computing.

### BACKGROUND

With the increasing popularity of container technology in cloud computing, container cluster management systems for performing container creation and deployment, such as Kubernetes, have also been widely used. In actual deployment operation and maintenance, users often need to view internal files of the system and copy the internal files of the system to the outside for backup and analysis. Common file types for viewing and backup include running logs, running data and the like.

### SUMMARY

A file processing method and apparatus, an electronic device, and a storage medium are provided by the present disclosure.

According to one aspect of the present disclosure, there is provided a file processing method, which includes:
determining a container, corresponding to container scheduling group information, in a target node based on the container scheduling group information corresponding to a file operation request received by the target node;
determining a file path of the container by using a node directory of the target node; and
performing an operation on a file under the file path, according to the file operation request.

According to another aspect of the present disclosure, there is provided a file processing apparatus, which includes:
a container determination module configured for determining a container, corresponding to container scheduling group information, in a target node based on the container scheduling group information corresponding to a file operation request received by the target node;
a path determination module configured for determining a file path of the container by using a node directory of the target node; and
a file operation module configured for performing an operation on a file under the file path, according to the file operation request.

According to another aspect of the present disclosure, there is provided an electronic device, which includes:
at least one processor; and
a memory communicatively connected with the at least one processor; wherein
the memory stores instructions executable by the at least one processor, and the instructions, when executed by the at least one processor, cause the at least one processor to perform the method in any one of embodiments of the present disclosure.

According to another aspect of the present disclosure, there is provided a non-transitory computer-readable storage medium storing computer instructions, wherein the computer instructions, when executed by a computer, cause the computer to perform the method in any one of the embodiments of the present disclosure.

According to another aspect of the present disclosure, there is provided a computer program product including a computer program, wherein the computer program, when executed by a processor, implements the method in any one of the embodiments of the present disclosure.

The embodiment of the present disclosure provides a file processing method in a case where a target node receives a file operation request, a specific container is located based on container scheduling group information, and a file path of the container is determined by using a node directory, so that an operation can be performed on a file in a container cluster management system, thereby eliminating the use of a proprietary command, reducing operation and maintenance requirements and having better compatibility.

It should be understood that the content described in this section is not intended to limit the key or important features of the embodiments of the present disclosure, nor is it intended to limit the scope of the present disclosure. Other features of the present disclosure will be easily understood through the following description.

### BRIEF DESCRIPTION OF THE DRAWINGS

The drawings are used to better understand the solution and do not constitute a limitation to the present disclosure, wherein:
FIG. 1 is a schematic diagram of a file processing method provided by an embodiment of the present disclosure;
FIG. 2 is a schematic diagram of a file processing method provided by another embodiment of the present disclosure;
FIG. 3 is a schematic diagram of a file processing apparatus provided by an embodiment of the present disclosure;
FIG. 4 is a schematic diagram of a file processing apparatus provided by another embodiment of the present disclosure; and
FIG. 5 is a block diagram of an electronic device for implementing a file method according to an embodiment of the present disclosure.

### DETAILED DESCRIPTION

Exemplary embodiments of the present disclosure are described below in combination with the drawings, including various details of the embodiments of the present disclosure to facilitate understanding, which should be considered as exemplary only. Thus, those of ordinary skill in the art should realize that various changes and modifications can be made to the embodiments described here without departing from the scope and spirit of the present disclosure. Likewise, descriptions of well-known functions and structures are omitted in the following description for clarity and conciseness.

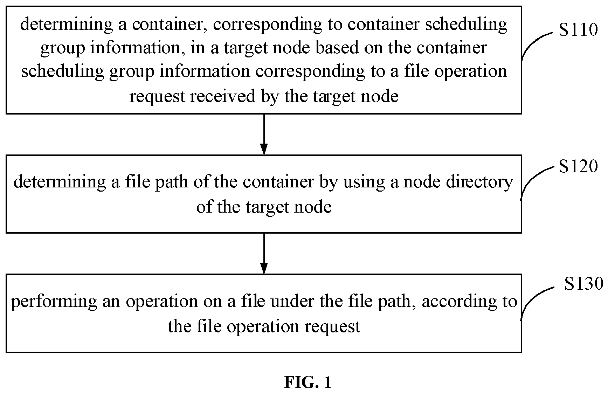

FIG. 1 shows a schematic diagram of a file processing method provided by an embodiment of the present disclosure. As shown in FIG. 1, the method includes:
S110, determining a container, corresponding to container scheduling group information, in a target node based on the container scheduling group information corresponding to a file operation request received by the target node;
S120, determining a file path of the container by using a node directory of the target node; and
S130, performing an operation on a file under the file path, according to the file operation request.

Illustratively, the target node may be a node (Node) in a container cluster management system. The container cluster management system, such as Kubernetes, is a container orchestration tool that supports automated deployment and management of containerized applications. Compared with a virtual machine, a container can be deployed quickly, and the container is decoupled from an underlying facility and a machine file system, so it can be migrated between different clouds and different versions of operating systems. The node is a hardware unit or a single machine in the container cluster management system, and is a host machine of the container. A container scheduling group, or Pod, is the smallest unit of the container cluster management system to create, schedule, and manage containers, is a collection of multiple containers, and provides a higher level of abstraction than the container, making deployment and management more flexible. For example, Kubernetes does not schedule containers directly, but encapsulates them in Pod. Containers in the same Pod will share the same namespace and local network, and the containers can easily communicate with each other in the same pod.

The above steps S11 to S13 in the embodiment of the present disclosure may be executed by the target node, specifically, may be executed by a file management agent module (Agent) in the target node. Illustratively, the file management agent module can be set in each node of Kubernetes, a requesting device that initiates the file operation request can send the file operation request to a distribution service module, and the distribution service module determines the target node and sends the file operation request to the target node. Illustratively, the container scheduling group information corresponding to the file operation request may be included in the file operation request, or it may be obtained by querying a metadata information collection of Kubernetes according to related information in the file operation request. A file requested, by the file operation request, to be operated may include an operation log, operation data, and the like.

According to the above step S11, in a case where the file management agent module receives the file operation request, such as a file view, copy request, etc., it can map the container scheduling group information corresponding to the request to a specific container in the node. The container here can refer to a container that runs according to a standard of the container runtime in the node after creation, wherein the container runtime is a software tool used to execute the container and manage the container mirror image on the node. In some embodiments of the present disclosure, the container runtime may use Docker. Correspondingly, the specific container in the node may also be called a Docker Container or a Docker container.

After determining the specific container, the node directory of the target node can be used to find the file path to be operated. Here, the node directory may refer to a directory used to reflect a file system of the entire container, or a path collection. After determining the file path, the operation, such as viewing or copying, can be performed on the file under the file path according to the file operation request.

In the embodiment of the present disclosure, a file processing method in a case where a file operation request is received by a target node is provided, a specific container is located based on container scheduling group information, and a file path of the container is determined by using a node directory, so that an operation can be performed on a file in a container cluster management system, thereby eliminating the use of a proprietary file operation command such as a tar command, reducing operation and maintenance requirements and having better compatibility. In addition, by setting a file management agent module as a dedicated module for managing Pod files in a node, compatibility can be further improved, and it can be connected to a video memory permission scheme and a bastion machine file management scheme in different user systems.

In an exemplary embodiment, the above method may further include:
in a case where a container scheduling group created by a container cluster management system corresponds to the target node, creating the container on the target node, and acquiring a file view of the container and a data volume mount directory of the container scheduling group; and
mounting the file view of the container and the data volume mount directory of the container scheduling group in the node directory of the target node.

The above steps may be executed by the target node, specifically, may be executed by the container runtime in the target node, such as Docker. For example, in Kubernetes, a container runs on a node. When the underlying container runtime adopts Docker, every time Kubernetes creates a Pod, a container of the Pod can be created on a node corresponding to the Pod, and the container will eventually run according to the standard of Docker.

According to the above embodiment, when a container is created, the underlying container runtime, such as Docker, determines a file view for the container. Illustratively, a complete file view can be provided to the container in a joint mount manner. The file view after joint mount will be mounted on the node directory of the target node, so that the node directory of the target node can reflect the file system of the container.

In addition, the container runtime will mount some data volumes (Volumes) required by the container scheduling group. For example, the Mount command is used to mount data volumes required by the Pod, to obtain the data volume mount directory. The data volume mount directory also exists in the node directory.

According to the above embodiment, when creating a container, the file view of the container and the data volume mount directory of the container scheduling group are mounted in the node directory of the target node. Therefore, the node directory can reflect file systems of all containers in the node, and can determine complete information required to operate the file through the node directory, which is conducive to the convenient operation of the file in the node.

Illustratively, in the above step S120, determining the file path of the container by using the node directory of the target node, includes:
searching for a corresponding file view and a corresponding data volume mount directory in the node directory of the target node according to the container.

Since the file view of each container and the data volume mount directory of the container scheduling group are mounted in the node directory, the corresponding file view and data volume mount directory can be found in the node directory according to the determined container. For example, in the node directory, a joint-mount file path and the file path mounted by the Mount command can be found through the Docker Container. Thus, the corresponding file view and data volume mount directory are used to accurately locate the file and operate the file at the node to meet the user's needs.

In an exemplary embodiment, the above step S110, determining the container, corresponding to the container scheduling group information, in the target node based on the container scheduling group information corresponding to the file operation request received by the target node, includes:
performing container logical name conversion from a container scheduling group to a container management tool based on the container scheduling group information corresponding to the file operation request received by the target node, to obtain container name information; and
determining the container corresponding to the container scheduling group information based on the container name information.

According to the above embodiment, the file management agent module is also used to implement container logical name conversion from the container scheduling group to the container management tool, for example, logical name conversion from a container of the Kubernetes Pod to a Docker container, to obtain name information of the Docker container. This allows the node to map Pod information to a specific Docker container in the node.

In an exemplary embodiment, in the above step S130, performing the operation on the file under the file path, according to the file operation request, includes:
performing the operation, corresponding to an operation type specified by the file operation request, on the file under the file path by using a local file service.

Herein, the local file service is, for example, Fileserver. Using Fileserver, a directory file jointly mounted by the node can be directly manipulated according to the file path. The operation type specified by the file operation request may include reading, copying, deletion, and the like.

In the above embodiment, directly operating a file through a local file service such as Fileserver has better transmission performance.

In an exemplary embodiment, the above method may further include:
querying, by a distribution service module, the container scheduling group information corresponding to metadata information in the file operation request, in a metadata information collection of a container cluster management system in a case where the distribution service module receives the file operation request, locating the target node according to the container scheduling group information, and sending the file operation request to the target node.

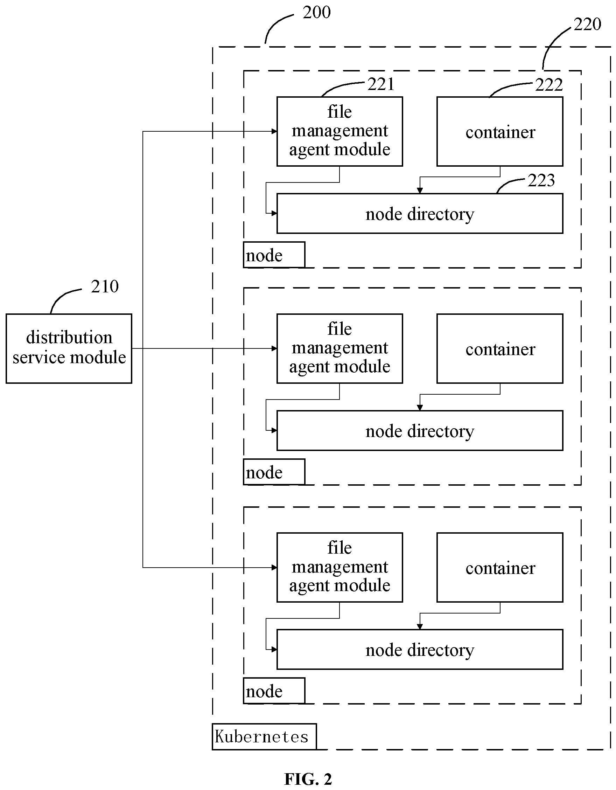

FIG. 2 shows a schematic diagram of performing an operation on a pod file in a case where the underlying container runtime of Kubernetes is docker, according to the above-mentioned embodiment. As shown in FIG. 2, Kubernetes 200 includes multiple nodes 220. A requesting device sends a file operation request for a certain pod file to a distribution service module (Dispenser) 210. The distribution service module 210 receives the file operation request, locates to a node 220 where a pod is located, and establishes a connection with a file management agent module 221 in the node 220. After the file management agent module 221 establishes a connection with the distribution service module 210 and receives the file operation request for the pod file, it maps pod information corresponding to the file operation request to a specific Docker container 222 of the node. Using a node directory 223, a joint-mount file path and a file path of Mount are found through the Docker container 222. Based on these file paths, the request for the file is processed through Fileserver. Fileserver directly manipulates the directory files jointly mounted by the node.

By setting the distribution service module and using the distribution service module to query the metadata information collection of the container cluster management system, the target node where the relevant container scheduling group is can be located, so the file path can be determined directly in the target node where the container scheduling group is located, compared with using proprietary commands to enter each node, it has a higher efficiency.

The embodiment of the present disclosure provides a file processing method in a case where a target node receives a file operation request, which can be applied to a cloud-native microservice application platform, such as a Stack platform. A specific container is located based on container scheduling group information, and a file path of the container is determined by a node directory, so that the a file in a container cluster management system can be operated, thereby eliminating the use of a proprietary command, reducing operation and maintenance requirements and having more good compatibility.

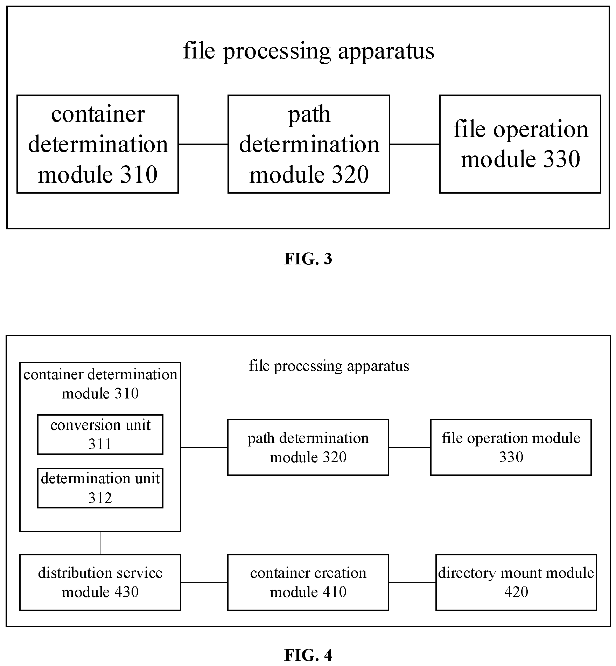

As an implementation of the above methods, the embodiment of the present disclosure also provide a file processing apparatus. FIG. 3 shows a schematic diagram of a file processing apparatus provided by an embodiment of the present disclosure. As shown in FIG. 3, the apparatus includes:
a container determination module 310 configured for determining a container, corresponding to container scheduling group information, in a target node based on the container scheduling group information corresponding to a file operation request received by the target node;
a path determination module 320 configured for determining a file path of the container by using a node directory of the target node; and
a file operation module 330 configured for performing an operation on a file under the file path, according to the file operation request.

Illustratively, as shown in FIG. 4, the file processing apparatus may further include:
a container creation module 410 configured for, in a case where a container scheduling group created by a container cluster management system corresponds to the target node, creating the container on the target node, and acquiring a file view of the container and a data volume mount directory of the container scheduling group; and
a directory mount module 420 configured for mounting the file view of the container and the data volume mount directory of the container scheduling group in the node directory of the target node.

Illustratively, the path determination module 320 is further configured for:
searching for a corresponding file view and a corresponding data volume mount directory in the node directory of the target node according to the container.

Illustratively, as shown in FIG. 4, the container determination module 310 includes:
a conversion unit 311 configured for performing logical name conversion from a container scheduling group to a container management tool based on the container scheduling group information corresponding to the file operation request received by the target node, to obtain container name information; and
a determination unit 312 configured for determining the container corresponding to the container scheduling group information based on the container name information.

Illustratively, the file operation module 330 is further configured for:
performing the operation, corresponding to an operation type specified by the file operation request, on the file under the file path by using a local file service.

Illustratively, as shown in FIG. 4, the file processing apparatus may further include:
a distribution service module 430 configured for querying the container scheduling group information corresponding to metadata information in the file operation request, in a metadata information collection of a container cluster management system in a case where the distribution service module receives the file operation request, locating the target node according to the container scheduling group information, and sending the file operation request to the target node.

The file processing apparatus provided by the embodiment of the present disclosure can implement the file processing method provided by the embodiment of the present disclosure, and has corresponding beneficial effects.

According to embodiments of the present disclosure, the present disclosure also provides an electronic device, a readable storage medium and a computer program product.

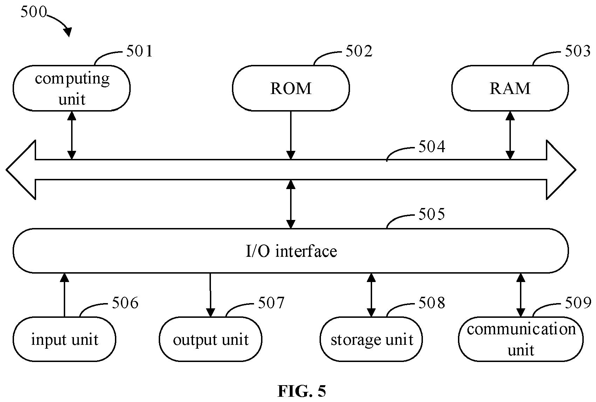

FIG. 5 shows a schematic diagram of an example electronic device 500 configured for implementing the embodiments of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as a personal digital assistant, a cellular telephone, a smart phone, a wearable device, and other similar computing devices. The components shown herein, their connections and relationships, and their functions are by way of example only and are not intended to limit the implementations of the present disclosure described and/or claimed herein.

As shown in FIG. 5, the electronic device 500 includes a computing unit 501 that may perform various suitable actions and processes in accordance with computer programs stored in a read only memory (ROM) 502 or computer programs loaded from a storage unit 508 into a random access memory (RAM) 503. In the RAM 503, various programs and data required for the operation of the electronic device 500 may also be stored. The computing unit 501, the ROM 502 and the RAM 503 are connected to each other through a bus 504. An input/output (I/O) interface 505 is also connected to the bus 504.

A plurality of components in the electronic device 500 are connected to the I/O interface 505, including: an input unit 506, such as a keyboard, a mouse, etc.; an output unit 507, such as various types of displays, speakers, etc.; a storage unit 508, such as a magnetic disk, an optical disk, etc.; and a communication unit 509, such as a network card, a modem, a wireless communication transceiver, etc. The communication unit 509 allows the electronic device 500 to exchange information/data with other devices over a computer network, such as the Internet, and/or various telecommunications networks.

The computing unit 501 may be various general purpose and/or special purpose processing assemblies having processing and computing capabilities. Some examples of the computing unit 501 include, but are not limited to, a central processing unit (CPU), a graphics processing unit (GPU), various specialized artificial intelligence (AI) computing chips, various computing units running machine learning model algorithms, a digital signal processor (DSP), and any suitable processor, controller, microcontroller, etc. The computing unit 501 performs various methods and processes described above, such as the file processing method. For example, in some embodiments, the file processing method may be implemented as computer software programs that are physically contained in a machine-readable medium, such as the storage unit 508. In some embodiments, some or all of the computer programs may be loaded into and/or installed on the electronic device 500 via the ROM 502 and/or the communication unit 509. In a case where the computer programs are loaded into the RAM 503 and executed by the computing unit 501, one or more of steps of the file processing method may be performed. Alternatively, in other embodiments, the computing unit 501 may be configured to perform the file processing method in any other suitable manner (e.g., by means of a firmware).

Various embodiments of the systems and techniques described herein above may be implemented in a digital electronic circuit system, an integrated circuit system, a field programmable gate array (FPGA), an application specific integrated circuit (ASIC), an application specific standard product (ASSP), a system on a chip (SOC), a load programmable logic device (CPLD), a computer hardware, a firmware, a software, and/or a combination thereof. These various implementations may include an implementation in one or more computer programs, which can be executed and/or interpreted on a programmable system including at least one programmable processor; the programmable processor may be a dedicated or general-purpose programmable processor and capable of receiving and transmitting data and instructions from and to a storage system, at least one input device, and at least one output device.

The program codes for implementing the methods of the present disclosure may be written in any combination of one or more programming languages. These program codes may be provided to a processor or controller of a general purpose computer, a special purpose computer, or other programmable data processing apparatus such that the program codes, when executed by the processor or controller, cause the functions/operations specified in the flowchart and/or the block diagram to be performed. The program codes may be executed entirely on a machine, partly on a machine, partly on a machine as a stand-alone software package and partly on a remote machine, or entirely on a remote machine or server.

In the context of the present disclosure, the machine-readable medium may be a tangible medium that may contain or store programs for using by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of the machine-readable storage medium may include one or more wire-based electrical connection, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination thereof.

In order to provide an interaction with a user, the system and technology described here may be implemented on a computer having: a display device (e. g., a cathode ray tube (CRT) or a liquid crystal display (LCD) monitor) for displaying information to the user; and a keyboard and a pointing device (e. g., a mouse or a trackball), through which the user can provide an input to the computer. Other kinds of devices can also provide an interaction with the user. For example, a feedback provided to the user may be any form of sensory feedback (e.g., visual feedback, auditory feedback, or tactile feedback); and an input from the user may be received in any form, including an acoustic input, a voice input or a tactile input.

The systems and techniques described herein may be implemented in a computing system (e.g., as a data server) that may include a background component, or a computing system (e.g., an application server) that may include a middleware component, or a computing system (e.g., a user computer having a graphical user interface or a web browser through which a user may interact with embodiments of the systems and techniques described herein) that may include a front-end component, or a computing system that may include any combination of such background components, middleware components, or front-end components. The components of the system may be connected to each other through a digital data communication in any form or medium (e.g., a communication network). Examples of the communication network may include a local area network (LAN), a wide area network (WAN), and the Internet.

The computer system may include a client and a server. The client and the server are typically remote from each other and typically interact via the communication network. The relationship of the client and the server is generated by computer programs running on respective computers and having a client-server relationship with each other.

It should be understood that the steps can be reordered, added or deleted using the various flows illustrated above. For example, the steps described in the present disclosure may be performed concurrently, sequentially or in a different order, so long as the desired results of the technical solutions disclosed in the present disclosure can be achieved, and there is no limitation herein.

The above-described specific embodiments do not limit the scope of the present disclosure. It will be apparent to those skilled in the art that various modifications, combinations, sub-combinations and substitutions are possible, depending on design requirements and other factors. Any modifications, equivalent substitutions, and improvements within the spirit and principles of the present disclosure are intended to be included within the scope of the present disclosure.

## Claims

1. A file processing method, comprising:
determining a container, corresponding to container scheduling group information, in a target node based on the container scheduling group information corresponding to a file operation request received by the target node;
determining a file path of the container by using a node directory of the target node; and
performing an operation on a file under the file path, according to the file operation request.

2. The method of claim 1, further comprising:
in a case where a container scheduling group created by a container cluster management system corresponds to the target node, creating the container on the target node, and acquiring a file view of the container and a data volume mount directory of the container scheduling group; and
mounting the file view of the container and the data volume mount directory of the container scheduling group in the node directory of the target node.

3. The method of claim 2, wherein the determining the file path of the container by using the node directory of the target node, comprises:
searching for a corresponding file view and a corresponding data volume mount directory in the node directory of the target node according to the container.

4. The method of any one of claims 1 to 3, wherein the determining the container, corresponding to the container scheduling group information, in the target node based on the container scheduling group information corresponding to the file operation request received by the target node, comprises:
performing container logical name conversion from a container scheduling group to a container management tool based on the container scheduling group information corresponding to the file operation request received by the target node, to obtain container name information; and
determining the container corresponding to the container scheduling group information based on the container name information.

5. The method of any one of claims 1 to 3, wherein the performing the operation on the file under the file path, according to the file operation request, comprises:
performing the operation, corresponding to an operation type specified by the file operation request, on the file under the file path by using a local file service.

6. The method of any one of claims 1 to 3, further comprising:
querying, by a distribution service module, the container scheduling group information corresponding to metadata information in the file operation request, in a metadata information collection of a container cluster management system in a case where the distribution service module receives the file operation request, locating the target node according to the container scheduling group information, and sending the file operation request to the target node.

7. A file processing apparatus, comprising:
a container determination module configured for determining a container, corresponding to container scheduling group information, in a target node based on the container scheduling group information corresponding to a file operation request received by the target node;
a path determination module configured for determining a file path of the container by using a node directory of the target node; and
a file operation module configured for performing an operation on a file under the file path, according to the file operation request.

8. The apparatus of claim 7, further comprising:
a container creation module configured for, in a case where a container scheduling group created by a container cluster management system corresponds to the target node, creating the container on the target node, and acquiring a file view of the container and a data volume mount directory of the container scheduling group; and
a directory mount module configured for mounting the file view of the container and the data volume mount directory of the container scheduling group in the node directory of the target node.

9. The apparatus of claim 8, wherein the path determination module is further configured for: searching for a corresponding file view and a corresponding data volume mount directory in the node directory of the target node according to the container.

10. The apparatus of any one of claims 7 to 9, wherein the container determination module comprises:
a conversion unit configured for performing logical name conversion from a container scheduling group to a container management tool based on the container scheduling group information corresponding to the file operation request received by the target node, to obtain container name information; and
a determination unit configured for determining the container corresponding to the container scheduling group information based on the container name information.

11. The apparatus of any one of claims 7 to 9, wherein the file operation module is further configured for:
performing the operation, corresponding to an operation type specified by the file operation request, on the file under the file path by using a local file service.

12. The apparatus of any one of claims 7 to 9, further comprising:
a distribution service module configured for querying the container scheduling group information corresponding to metadata information in the file operation request, in a metadata information collection of a container cluster management system in a case where the distribution service module receives the file operation request, locating the target node according to the container scheduling group information, and sending the file operation request to the target node.

13. An electronic device, comprising:
at least one processor; and
a memory communicatively connected with the at least one processor; wherein
the memory stores instructions executable by the at least one processor, and the instructions, when executed by the at least one processor, cause the at least one processor to perform the method of any one of claims 1 to 6.

14. A non-transitory computer-readable storage medium storing computer instructions, wherein the computer instructions, when executed by a computer, cause the computer to perform the method of any one of claims 1 to 6.

15. A computer program product comprising a computer program, wherein the computer program, when executed by a processor, implements the method of any one of claims 1 to 6.
